(19) Europäisches Patentamt

European Patent Office

Office européen des brevets

(11) EP 0 586 986 B1

(12) EUROPÄISCHE PATENTSCHRIFT

(45) Veröffentlichungstag und Bekanntmachung des Hinweises auf die Patenterteilung:
12.11.1997 Patentblatt 1997/46

(51) Int Cl.6: **C09D 4/06**, C09D 17/00, C08F 283/02, C08F 299/04

(21) Anmeldenummer: 93113719.4

(22) Anmeldetag: 27.08.1993

(54) **Pigmentpasten, Verfahren zur Herstellung von Pigmentpasten und deren Verwendung zur Pigmentierung von Überzugsmitteln**

Pigment pastes, process for the preparation of pigment pastes and their use for the pigmentation of coatings

Pâtes pigmentaires, procédé de fabrication de pâtes pigmentaires et leur utilisation pour la pigmentation de revêtement

(84) Benannte Vertragsstaaten:
AT BE DE ES FR GB IT NL PT SE

(30) Priorität: 02.09.1992 DE 4229196

(43) Veröffentlichungstag der Anmeldung:
16.03.1994 Patentblatt 1994/11

(73) Patentinhaber: **Herberts Gesellschaft mit beschränkter Haftung**
42285 Wuppertal (DE)

(72) Erfinder:
• **Bajorat, Gerda**
D-42281 Wuppertal (DE)

• **Hamel, Claudia**
D-40699 Erkrath (DE)
• **Kern, Hartmut**
D-42105 Wuppertal (DE)

(74) Vertreter: **Türk, Gille, Hrabal, Leifert**
**Brucknerstrasse 20**
**40593 Düsseldorf (DE)**

(56) Entgegenhaltungen:
EP-A- 0 391 271        EP-A- 0 393 609
FR-A- 2 334 726

**Beschreibung**

Die Erfindung betrifft ein Verfahren zur Herstellung einer Pigmentpaste mit breiter Verwendbarkeit, die insbesondere für die Herstellung von pigmentierten Basis- und Decklacken geeignet ist.

Seit Einführung wasserverdünnbarer Basis- bzw. Decklacke stellt sich für Lackhersteller das Problem, jeden Farbton in Form des wasserverdünnbaren und zusätzlich des lösemittelbasierenden Lackes bzw. der betreffenden Vorprodukte herstellen und bevorraten zu müssen, um den unterschiedlichen Geräteausstattungen der Anwender entsprechen zu können. Handelt es sich z.B. um Autolacke, so muß der farbtongleiche Autoserien- und der Autoreparaturlack, gegebenenfalls in mehreren Varianten hinsichtlich des Trocknungsmechanismus, zur Verfügung stehen.

Es ist notwendig, für jedes Lacksystem eine spezielle Anreibekomponente zur Herstellung einer geeigneten Pigmentpaste einzusetzen. Nach Herstellung der Pigmentpaste wird jeweils mit einem oder mehreren weiteren Bindemitteln der Lack vollständig eingestellt. Dabei müssen die Bestandteile aufeinander abgestimmt sein, um ein geeignetes Überzugsmittel zu erhalten, z.B. muß es lagerstabil sein und die hohen optischen Anforderungen erfüllen. Dabei kann im Hauptbindemittel des Lackes angerieben werden oder es werden spezielle Pastenharze (Anreibeharze) zur Herstellung der Pigmentpaste verwendet.

Ein allgemeines Problem liegt nun in der Notwendigkeit, für jeden Farbton eine Pigmentpaste für jedes unterschiedliche Lacksystem erstellen und bevorraten zu müssen. Die Fertigung wird damit aufwendig und es wird eine große Lagerhaltung notwendig.

Besondere Probleme ergeben sich im Falle der Fertigung und Lagerung wasserverdünnbarer Lacksysteme bzw. der zugrunde liegenden wasserverdünnbaren Pigmentpasten. So können nur korrosionsbeständige Fertigungsanlagen und Gebinde, z.B. aus Edelstahl, verwendet werden, und der Lagerplatz muß Temperaturen aufweisen, die ein Gefrieren verhindern, da dadurch die Wasserlackmaterialien geschädigt werden können.

In der EP-A-0 052 224 werden Pigmentpasten beschrieben, die zur Herstellung von wäßrigen oder lösemittelhaltigen Lacken dienen. Sie bestehen aus Bindemitteln mit hohem Lösungsmittelgehalt auf Basis von Copolymeren von wasserlöslichen N-Vinyl-Verbindungen. Damit hergestellte Lacke zeigen jedoch eine hohe Empfindlichkeit gegen Wasser.

In der DE-A 39 10 829 werden wäßrige Überzugsmittel beschrieben, die auf Basis von nach Neutralisation mit Basen wasserlöslichen Polyesteroligomer-Polyacrylaten zusammen mit Vernetzern hergestellt werden. Diese Überzugsmittel sind besonders als Klarlacküberzugsmittel geeignet. Die Bindemittel werden als wäßrige Lösung eingesetzt.

Aufgabe der Erfindung ist die Bereitstellung eines Verfahrens zur Herstellung einer Pigmentpaste, die in verschiedenen Lacksystemen, beispielsweise in wäßrigen und nicht-wäßrigen Lacksystemen einsetzbar ist, wodurch die eingangs erwähnten Nachteile, wie hoher Entwicklungsaufwand, großer Lagerplatzbedarf, geringe Ansatzgrößen und Instabilität gegen Frost, vermieden werden.

Es hat sich gezeigt, daß diese Aufgabe gelöst werden kann durch die Bereitstellung eines Verfahren zur Herstellung einer Pigmentpaste durch Anreiben oder Vermischen von einem oder mehreren Pigmenten und/oder Füllstoffen in einem Pastenharz (Anreibeharz), das dadurch gekennzeichnet ist, daß man als Pastenharz ein Polyesteroligomer-Polyacrylat verwendet, das erhältlich ist durch radikalische Polymerisation von

A) 80 - 50 Gew.-% von

a) einem oder mehreren hydroxyfunktionellen (Meth)Acrylsäureestern (der hier verwendete Ausdruck (Meth) acryl soll Acryl und/oder Methacryl bezeichnen) und
b) einer oder mehreren monofunktionellen ethylenisch ungesättigten Säuren und gegebenenfalls
c) einem oder mehreren von a) und b) unterschiedlichen alpha,beta-ethylenisch ungesättigten Monomeren ohne funktionelle Gruppen, in

B) 20 - 50 Gew.-% eines oder mehrerer Polyesteroligomerer, mit einem errechneten Molekulargewicht von 200 - 1000, bevorzugt 300 - 600, einer OH-Zahl von 280 - 600, bevorzugt 400 - 500 mg KOH/g und einer Säurezahl von 0 - 1,5 mg KOH/g, erhältlich durch Polykondensation von einem oder mehreren Diolen, Polyolen und Dicarbonsäuren und deren Derivaten, wobei die Monomeren a), b) und c) in derartigen Mengen eingesetzt werden, daß das erhaltene Polyesteroligomer-Polyacrylat eine Hydroxylzahl von 150 - 390 und eine Säurezahl von 16 - 40 aufweist, und daß das Anreiben oder Vermischen in Abwesenheit von Wasser erfolgt.

Die Erfindung betrifft ferner die Verwendung des oben beschriebenen Polyesteroligomer-Polyacrylats als Pastenharz zum Anreiben von deckenden Pigmenten und/oder Füllstoffen oder zum Vermischen mit effektgebenden Pigmenten in Abwesenheit von Wasser.

Weiterhin betrifft die Erfindung die Verwendung der erfindungsgemäß hergestellten Pigmentpasten zum Pigmentieren von wäßrigen und nicht-wäßrigen Überzugsmitteln sowie zur Herstellung von Lackierungen.

Bei der Herstellung des erfindungsgemäß verwendeten Polyesteroligomer-Polyacrylats wird die Polyesteroligomer-Komponente B) vorgelegt und die Monomer-Komponente A) wird darin polymerisiert.

Polyesteroligomer-Polyacrylate dieser Art werden in der DE-A-39 10 829 als Bindemittel für wäßrige Überzugsmittel beschrieben.

Das errechnete Molekulargewicht M wird ermittelt nach T.C. Patton, Alkyd Resin Technology "Formulating Techniques and Allied Calculations", 1962, Seite 106 ff, wie folgt

$$M = \frac{W}{(M_o - e_a) + \frac{W_{(AN)}}{56100}}$$

M =          Mittleres errechnetes Molekulargewicht
W =          Gewicht aller Komponenten abzüglich Kondensationswasser
$M_o$ =         Anzahl aller Mole
$e_a$ =         Äquivalente der Säure
$W_{(AN)}$=         Säurezahl des Polyesteroligomeren

Das Polyesteroligomere kann zur Herstellung des Polyesteroligomer-Polyacrylats ohne Lösemittel als alleiniges Reaktionsmedium eingesetzt werden.

Bei der Herstellung des Polyesteroligomeren-Polyacrylats kann aber auch ein Lösemittel für das Polyesteroligomere zugesetzt werden. Es können alle lacktypischen Lösemittel eingesetzt werden.

Geeignete Lösemittel sind bevorzugt solche, welche unbeschränkt mit Wasser mischbar sind, z.B. einwertige aliphatische Alkohole wie solche mit 2 bis 4 Kohlenstoffatomen, z.B. Ethanol und Isopropanol oder Ketone, z.B. Aceton oder Methylethylketon oder Glykolether wie z.B. Methylglykol, Ethylglykol, Butoxyethanol, Methoxypropanol, Ethoxypropanol und Methoxypropoxypropanol oder Diole wie z.B. Ethylenglykol und Propylenglykol oder Polyetherdiole wie z.B. Polyethylenglykol und Polypropylenglykol oder alle anderen mit Wasser unbeschränkt mischbaren Lösemittel anderer Verbindungsklassen bzw. der Gemische der vorgenannten Verbindungen bzw. Verbindungsklassen. Es können aber gegebenenfalls auch nur anteilig solche Lösemittel Verwendung finden, welche nur beschränkt oder gar nicht mit Wasser mischbar sind. Die organischen Lösungen der Poylesteroligomer-Polyacrylate besitzen einen Lösungsmittelgehalt von bis zu 30 Gew.-%, bevorzugt unter 20 Gew.-%.

Das bei der Herstellung der erfindungsgemäß als Anreibeharz einsetzbaren Polyesteroligomer-Poylacrylat-Komponente als Reaktionsmedium verwendete Polyesteroligomere kann aus Polyolen, Dicarbonsäuren und Diolen hergestellt werden. Die Polykondensation erfolgt nach üblichen, dem Fachmann geläufigen Verfahren, beispielsweise in Gegenwart von üblichen Veresterungskatalysatoren und bei erhöhten Temperaturen von z.B. 180 bis 230°C in der Schmelze.

Beispiele für das Polyol sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit.

Beispiele für die Dicarbonsäuren sind aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Endomethylentetrahydrophthalsäure, Endoethylentetrahydrophthalsäure und Cyclohexandicarbonsäure (1.2, 1.3 und 1.4), Itaconsäure, Muconsäure und Camphersäure, oder gegebenenfalls deren mögliche Anhydride.

Beispiele für verwendbare Diole sind aliphatische Diole, wie z.B. Ethylenglykol, Propylenglykol (1.3 und 1.2), Butandiol, Hexandiol (1.6), Neopentylglykol; Polyetherglykole des Ethylens und Propylens mit bis zu 6 Monomerbausteinen, wie Diethylenglykol, Triethylenglykol, Tetraethylenglykol und Hexaethylenglykol; und cycloaliphatische Diole, wie 1.3-Dimethylolcyclohexan und 1.4-Dimethylolcyclohexan.

In dem Polyesteroligomeren oder dessen Lösung, z.B. in einem Monoalkohol, werden ein hydroxyfunktioneller (Meth)acrylatester, eine monoethylenisch ungesättigte Säure und gegebenenfalls ein (Meth)acrylsäureester ohne Hydroxyfunktionen, entweder allein oder im Gemisch, einer radikalischen Polymerisation in Anwesenheit eines Radikalinitiators unterzogen. Beispiele für Radikalinitiatoren sind:

Dialkylperoxide, wie Di-tert.-Butylperoxid, Di-cumylperoxid; Diacylperoxide, wie Di-benzoylperoxid, Di-Lauroylperoxid; Hydroperoxide, wie Cumolhydroperoxid, tert.-Butylhydroperoxid; Perester, wie tert.-Butylperbenzoat, tert.-Butylperpivalat, tert.-Butyl-per-3,5,5-trimethylhexanoat, tert.-Butyl-per-2-ethylhexanoat; Peroxidicarbonate, wie Di-2-ethylhexylperoxydicarbonat, Dicyclohexyl-peroxydicarbonat; Perketale, wie 1,1-Bis(tert.-Butylperoxy)3,5,5-trimethylcyclohexan, 1,1-Bis(tert.-Butylperoxy)cyclohexan; Ketonperoxide, wie Cyclohexanonperoxid, Methylisobutylketonperoxid und Azo-Verbindungen, wie 2,2'-Azo-bis(2,4-dimethylvaleronitril), 2,2'-Azo-bis(2-methylbutyronitril), 1,1'Azo-biscyclohexancarbonitril, Azo-bis-isobutyronitril.

Die Radikalinitiatoren werden im allgemeinen in einer Menge von 0,1 bis 4 Gew.-%, bezogen auf die Monomeren-Einwaage, zugesetzt.

Beispiele für die verwendbaren hydroxyfunktionellen (Meth)-acrylester

a) sind (Meth)acrylester des Ethylenglykols, Propylenglykols (1.2 und 1.3), Butandiols (1.4), Hexandiols (1.6), sowie Polyethylenglykolmono (meth)acrylat mit 6 bis 8 Ethylenglykoleinheiten und n-Propylenglykolmono (meth)acrylat mit 5 bis 6 Propylenglykoleinheiten. Bevorzugte Beispiele sind Hydroxyethylacrylat-Caprolacton-Addukte, Butandiol(1.4) mono(meth)acrylat, Polypropylenglykolmono(meth)acrylat und Polyethylenglykolmono(meth)acrylat.

Beispiele für die α,β-ethylenisch ungesättigten Carbonsäuren

b) sind Acrylsäure oder Methacrylsäure sowie Maleinsäure und Fumarsäure und deren Halbester mit aliphatischen Alkoholen.

Beispiele für die α,β-ethylenisch ungesättigten Monomeren

c) ohne funktionelle Gruppen sind: (Meth)acrylsäureester von Alkoholen mit 1 bis 12 Kohlenstoffatomen in der Kette, wie z.B. Methyl-, Ethyl-, n-Propyl-, Isopropyl-, Butyl(n-, iso- und tert.-), Hexyl-, 2-Ethylhexyl- und Lauryl-Alkohol, sowie aromatische Vinylverbindungen, wie Styrol, Vinyltoluol und α-Methylstyrol.

Man erhält erfindungsgemäß einsetzbare Pastenharze in lösemittelfreier oder organisch gelöster Form.

Zur erfindungsgemäßen Herstellung der Pigmentpaste können die Polyesteroligomer-Polyacrylate auch nach Neutralisation mit Basen eingesetzt werden. Als Basen dienen insbesondere die auf dem Lacksektor üblichen Amine, wobei es sich bevorzugt um flüchtige organische niedermolekulare Amine oder um Ammoniak handelt. Die Neutralisation des Polyesteroligomer-Polyacrylats erfolgt gegebenenfalls unter Erwärmen zur Erzielung einer günstigen Arbeitsviskosität oder nach Zusatz von wasserverträglichen bzw. wasserlöslichen organischen Lösemitteln. Die Base wird in einer derartigen Menge zugegeben, daß der pH-Wert des erzielten neutralisierten Produktes nach dem Verdünnen mit Wasser bei etwa 7,0 bis 10, bevorzugt 7,5 bis 9 liegt.

In die erfindungsgemäß hergestellten Pigmentpasten können alle üblichen bekannten Pigmente eingearbeitet werden. Unter "Pigmente" sollen hier alle üblichen anorganischen und/oder organischen Pigmente, jedoch auch Füllstoffe und andere Farbstoffe verstanden werden.

Insbesondere können für die erfindungsgemäß hergestellten Pigmentpasten alle üblichen anorganischen und/oder organischen farbgebenden Pigmente verwendet werden, wie z.B. Ruß, Titandioxid, Phthalocyanin-, Perylen- oder Chinacridonpigmente. Ebenfalls können Effektpigmente, wie z.B. Metallicpigmente oder Interferenzpigmente zugesetzt werden. Zu diesen können zusätzlich farblose Pigmente, z.B. mikronisiertes Titandioxid oder Siliciumdioxid oder Farbstoffe zur Erzielung besonderer optischer Effekte zugesetzt werden.

Beim erfindungsgemäßen Verfahren wird bevorzugt mit einem Pigment- bzw. Füllstoff-/Pastenharz-Verhältnis im Bereich von 0,05 bis 2,5 : 1, bezogen auf das Festkörpergewicht, je nach der Art des eingesetzten Pigments, gearbeitet.

Den erfindungsgemäß hergestellten Pigmentpasten können während oder nach der Herstellung weitere übliche Additive zugesetzt werden, wie z.B. Dispergierhilfsmittel, Entschäumer, Netzmittel und Antiabsetzmittel, wie z.B. pyrogenes Siliciumdioxid. Es können der Pigmentpaste auch weitere lackübliche Hilfsmittel zugesetzt werden, die dem vollständigen Überzugsmittel zugeführt werden sollen, z.B. Verlaufsmittel.

Der Vorgang des Anreibens beim erfindungsgemäßen Verfahren kann in üblicher, dem Fachmann geläufiger Weise, beispielsweise durch Dispergieren der Pigmente in geeigneten Mahlaggregaten, wie z.B. Perlmühlen, erfolgen und bedarf keiner näheren Erläuterung.

Bevorzugt erfolgt die Anreibung in der organischen Lösung des Polyesteroligomer-Polyacrylats oder in dessen lösemittelfreier Form. Die Mischung aus dem, gegebenenfalls gelösten Pastenharz, Pigmenten, Füllstoffen und Additiven wird bis zur gewünschten Kornfeinheit der Pigmente dispergiert. Geeignete Korngrößen liegen im allgemeinen bei bis zu 15 µm, bevorzugt unter 10 µm.

Effektpigmente, wie z.B. Metall- oder Perlglanzpigmente werden unter Bildung einer Effektpigmentpaste mit erfindungsgemäß verwendetem Polyesteroligomer-Polyacrylat bzw. dessen organischer Lösung gemischt bzw. darin aufgeschlossen.

Durch diese Arbeitsweise wird das Auftreten von Schaum weitgehend verhindert und man erhält eine universell verwendbare Pigmentpaste, die lager- und froststabil ist.

Aus diesen gegebenenfalls organische Lösemittel enthaltenden Pasten können durch Verdünnen mit Wasser nach vorheriger Neutralisation mit Basen wäßrige Pigmentpasten hergestellt werden. Als Basen dienen insbesondere die auf dem Lacksektor üblichen Amine, wobei es sich bevorzugt um flüchtige organische niedermolekulare Amine oder um Ammoniak handelt.

Die erfindungsgemäß hergestellten Pigmentpasten können eingesetzt werden zur Herstellung von wasserverdünnbaren und lösemittelbasierenden pigmentierten Beschichtungsmitteln. Sie werden dazu jeweils in eine geeignete wäßrige oder nichtwäßrige Form gebracht. Insbesondere sind sie geeignet zur Pigmentierung von Basis- und Decklacken.

Bei den Überzugsmitteln kann es sich um physikalisch trocknende oder chemisch vernetzende Systeme handeln.

Die pigmentierten Überzugsmittel können ein- oder mehrkomponentig sein. Beispiele sind konventionelle oder wasserverdünnbare Basislacke, konventionelle oder wasserverdünnbare oxidativ trocknende Kunstharzlacke, konventionelle oder wasserverdünnbare 1- oder mehrkomponentige Decklacke vom chemisch vernetzenden Typ.

Den chemisch vernetzenden Decklacken liegen bevorzugt solche Vernetzungsmechanismen zugrunde, die über Reaktionen von Hydroxylgruppen verlaufen, wie z.B. Urethanbildung mit gegebenenfalls blockierten Isocyanatgruppen üblicher Polyisocyanatvernetzer, Etherbildung, z.B. durch Umetherung mit Alkoxymethylgruppen üblicher Aminoplastvernetzer, Umesterung/Umamidierung mit üblichen Umesterungs/Umamidierungsvernetzern. Selbstverständlich können die erfindungsgemäßen Pigmentpasten aber auch in durch andere Vernetzungsreaktionen vernetzbaren Überzugsmitteln eingesetzt werden.

Zur Herstellung pigmentierter Beschichtungsmittel können den erfindungsgemäß hergestellten Pigmentpasten Lackbindemittel, gegebenenfalls Vernetzer, lackübliche Additive, Lösemittel, im Falle wasserverdünnbarer Überzugsmittel zusätzlich gegebenenfalls Neutralisationsmittel und Wasser in geeigneter Reihenfolge zugesetzt werden, worauf gut homogenisiert wird. Die Lackbindemittel liegen in organisch gelöster oder im Falle der Herstellung wasserverdünnbarer pigmentierter Überzugsmittel gegebenenfalls auch in mit Wasser verdünnter Form vor. Die Verfahren zum Herstellen von Überzugsmitteln sind dem Fachmann geläufig und werden je nach dem gewählten Beschichtungssystem festgelegt.

Die Auswahl der Lackbindemittel richtet sich nach den technologischen Anforderungen an die damit zu erzeugende Beschichtung. So können übliche Lackbindemittel, z.B. Polyester, Acrylatharze oder Polyurethane als Lackbindemittel eingesetzt werden. Es können die in der Literatur beschriebenen Vernetzer zugesetzt werden. Es können ein oder mehrere verschiedene Bindemittel und Vernetzer eingesetzt werden. Gegebenenfalls ist es auch möglich, weitere Bindemittel vom Typ der oben erwähnten Pastenharze als Lackbindemittel zuzusetzen.

Im allgemeinen beträgt der Anteil des zur erfindungsgemäßen Herstellung der Pigmentpasten eingesetzten Polyesteroligomer-Polyacrylats in den damit pigmentierten Überzugsmitteln bis zu 50 Gew.-%, bezogen auf Festharz (Summe aus Pastenharz plus Bindemittel plus gegebenenfalls Vernetzer). Bevorzugt liegt er unter 30 Gew.-%. Gegebenenfalls kann auch das in der Pigmentpaste eingesetzte Pastenharz Alleinbindemittel neben dem Vernetzerharz sein, wie z.B. im Falle von wasserverdünnbaren Decklacken. Dann beträgt das Verhältnis von Pastenharz zu Vernetzer von 60:40 bis zu 90:10, bezogen auf das Festkörpergewicht.

In physikalisch trocknenden oder nicht unter Einbezug von Hydroxylgruppen vernetzenden Überzugsmitteln liegt der Festharzanteil des erfindungsgemäß eingesetzten Pastenharzes unter 20 Gew.-%, vorzugsweise unter 15 Gew.-%.

Es sollte darauf geachtet werden, daß die erfindungsgemäß hergestellten Pigmentpasten die Lagerstabilität der damit formulierten Überzugsmittel nicht negativ beeinflussen. So sollten die erfindungsgemäß eingesetzten Pigmentpasten beispielsweise im Falle von zweikomponentigen Polyurethan-Decklacken nicht Bestandteil der Isocyanatkomponente sein. Ebenso ist es günstig, die wäßrigen Pigmentpasten nur mit Bindemitteln gleichsinniger Ladung zu kombinieren. Es ist günstig nicht-wäßrige Überzugsmittel mit nicht-wäßrigen Pigmentpasten herzustellen.

Die erfindungsgemäß hergestellten Pigmentpasten können auch zum Tönen von Überzugsmitteln verwendet werden. Dabei werden sie in geringen Mengen eingesetzt. Die Verwendung als Tönpaste kann in allen wasserverdünnbaren oder konventionellen Überzugsmitteln, wie z.B. auch Füllern, erfolgen. Die erfindungsgemäß hergestellten Pigmentpasten zeichnen sich aus durch universelle Verwendbarkeit, d.h. sowohl in wasserverdünnbaren als auch in konventionellen Überzugsmitteln. Sie erfordern keine besonderen Maßnahmen bei der Herstellung, wie z.B. Bekämpfung von Schaumproblemen oder Bereitstellung korrosionsbeständiger Fertigungsanlagen. Sie sind in wasserfreier Form unverändert lagerfähig und froststabil.

Die unter Verwendung der erfindungsgemäß hergestellten Pigmentpasten hergestellten Überzugsmittel sind geeignet zur Herstellung von pigmentierten Überzügen mit hoher optischer Qualität und erfüllen heutige technologische Anforderungen.

Die folgenden Beispiele erläutern die Erfindung. Prozentangaben beziehen sich, falls nicht anders angegeben, auf das Gewicht.

Herstellung eines Polyesteroligomeren

Beispiel 1:

336,7 g Trimethylolpropan, 366,8 g Adipinsäure und 297 g Hexandiol werden mit 5 g unterphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl < 1,5 kondensiert.

Das so erhaltene Produkt hat einen Einbrennrückstand von 94,5 % (1 h, 150°C), eine Viskosität von 3200 mPas (100%ig), eine Hydroxylzahl von 460 und eine Farbzahl von 30 Hazen.

Herstellung von Polyesteroligomer-Polyacrylaten

Beispiel 2:

717 g des Oligoesters aus Beispiel 1 werden mit 311 g Butoxyethanol in einem mit Rührer, Rückflußkühler, Tropftrichter und Thermometer versehenen 4-Liter-Dreihalskolben vorgelegt und auf 140°C erhitzt.

Anschließend wird in 4 Stunden eine Mischung aus 552 g Butandiolmonoacrylat, 946 g tert. Butylacrylat, 74 g Acrylsäure und 100 g Trigonox C (tert. Butylperbenzoat) zugetropft und 4 Stunden nachpolymerisiert.

Das Produkt hatte einen Einbrennrückstand von 84,0 % (1 h, 150°C) gemäß DIN 53182, eine Viskosität von 15830 mPas (DIN 53015), eine Säurezahl von 38,0 mg KOH/g FK. (DIN 53402), eine OH-Zahl von 231 mg KOH/1 g FK. (DIN 53240) und eine Farbzahl von 60 Hazen (DIN 53409).

Herstellung von Pigmentpasten

Beispiel 3:

81,6 Teile der Pastenharzlösung aus Beispiel 2 wurden unter dem Dissolver mit 2 Teilen Hexylenglykol und 10,4 Teilen Butoxyethanol verdünnt. Anschließend wurden 6 Teile pyrogene Kieselsäure (Aerosil R 972 der Firma Degussa) gleichmäßig eingerührt und in einer Perlmühle bei 60ºC auf eine Kornfeinheit von 10 µm vermahlen.

Beispiel 4:

Unter dem Dissolver wurden 65 Teile der Pastenharzlösung aus Beispiel 2 mit 10 Teilen der Paste aus Beispiel 3 und 10 Teilen eines Lösungsmittelgemisches aus Butoxyethanol, Hexylenglykol und Ethanol im Gewichtsverhältnis 8: 2:2 versetzt, 5 Teile Ruß gleichmäßig eingerührt und mit weiterer 10 Teilen des vorstehend erwähnten Lösemittelgemisches verdünnt. Anschließend wurde in einer Perlmühle bei 60ºC auf eine Kornfeinheit von < 10 µm ausgemahlen.

Beispiel 5:

Unter dem Dissolver wurden 23 Teile der Pastenharzlösung aus Beispiel 2 mit 10 Teilen der Pigmentpaste aus Beispiel 3 und 7 Teilen des Lösungsmittelgemisches aus Beispiel 4 versetzt. Anschließend wurden 60 Teile Titandioxid gleichmäßig eingerührt und danach in einer Perlmühle bei 60ºC auf eine Kornfeinheit von 10-12 µm ausgemahlen.

Beispiel 6:

Unter dem Dissolver wurden 60 Teile der Pastenharzlösung aus Beispiel 2 mit 10 Teilen Pigmentpaste aus Beispiel 3 und 20 Teilen des Lösemittelgemisches aus Beispiel 4 versetzt. Anschließend wurden 10 Teile Phthalocyaninblau (Heliogenblau L 6975 F der Firma BASF) gleichmäßig eingerührt und danach in einer Perlmühle bei 60ºC auf eine Kornfeinheit von < 10 µm ausgemahlen.

Beispiel 7:

Unter dem Dissolver wurden 10 Teile Pastenharzlösung aus Beispiel 2 mit 10 Teilen des Lösemittelgemisches aus Beispiel 4 versetzt. Anschließend wurden 33 Teile einer handelsüblichen Aluminiumpaste (65%ig in Testbenzin/Solvesso 100, Alupaste R 507 ES der Firm Eckart) eingerührt und mit 47 Teilen des schon erwähnten Lösungsmittelgemisches verdünnt. Es wurde 15 Minuten bei 20°C gerührt.

Herstellung von pigmentierten Lacken

Beispiel 8: (Lösemittelbasierender 1K-Decklack)

Die in nachstehender Tabelle angegebenen Mengen einer 70%igen Lösung eines mittelöligen, nicht trocknenden Alkydharzes mit einen Phthalsäureanteil von 32 % gelöst in Solvesso 100 (I), einer 55%igen isobutanolischen Lösung eines isobutanolveretherten Melaminformaldehydharzes (II) wurden vorgelegt und unter dem Dissolver danach die Pigmentpaste gemäß nachstehender Tabelle zugegeben. Nach gleichmäßigem Untermischen wurden jeweils 0,4 Teile eines handelsüblichen Verlaufsmittels auf Organosiloxanbasis und 0,8 Teile einer 1%igen xylolischen Lösung eines Phenylmethylsiloxans zugegeben und mit 11 Teilen eines Lösungsmittelgemisches aus 36 % eines Terpenkohlenwasserstoffes, 46 % Solvesso 100 und 18 % Butylacetat verdünnt.

| Beispiel | Menge I | Menge II | Paste |
|----------|---------|----------|-------|
| 8 a | 25 T | 28 T | 34,8 T aus Bsp. 4 |
| 8 b | 25 T | 21 T | 41,8 T aus Bsp. 5 |
| 8 c | 21 T | 26,5 T | 40,3 T aus Bsp. 6 |

Beispiel 9: (Wasserverdünnbarer 1K-Decklack)

25 Teile der Pastenharzlösung aus Beispiel 2 wurden unter dem Dissolver mit 14 Teilen der Pigmentpaste aus Beispiel 5, 9,5 Teilen der Pigmentpaste aus Beispiel 6 und 0,4 Teilen der Pigmentpaste aus Beispiel 4 versetzt. Nach Homogenisierung wurden langsam 20 Teile einer Lösung von 1 Teil Dimethylethanolamin in 10 Teilen deionisiertem Wasser zugegeben und anschließend vorsichtig mit 14,1 Teilen eines Gemisches aus Ethanol/Butanol/Butoxyethanol/ deionisiertes Wasser im Verhältnis 1:1:2:25 verdünnt. Nach Homogenisierung wurden 17 Teile einer 85%igen isobutanolischen Lösung eines hochiminofunktionellen methanolveretherten Melaminformaldehydharzes eingerührt.

Beispiel 10: (Lösemittelbasierender 2K-Decklack)

70 Teile einer 55%igen Lösung eines Acrylatharzes mit einer Säurezahl von 7 und einer Hydroxylzahl von 140 mg KOH/g in einem Gemisch aus Xylol/Butylacetat/Solvesso 100 im Verhältnis 20:16:9 wurden unter dem Dissolver mit 11,9 Teilen der Pigmentpaste aus Beispiel 6, 0,5 Teilen der Pigmentpaste aus Beispiel 4, 17,6 Teilen der Pigmentpaste aus Beispiel 5 versetzt. Vor der Applikation wurden auf 100 Teile dieser Mischung 50 Teile einer 41%igen Lösung eines aliphatischen Polyisocyanats (Desmodur N 3390 der Firma Bayer) in einer Mischung aus Methoxypropylacetat/Solvesso 100/Butylacetat/Butylglykolacetat im Verhältnis 50:5:30:15 als Vernetzer zugesetzt.

Beispiel 11: (Lösemittelbasierender Metallicbasislack)

20 Teile einer 55%igen Lösung eines handelsüblichen Ethylen-Acrylsäure-Copolymeren mit einer Säurezahl von 40 mg KOH/g in einer Mischung aus Butylacetat und Xylol im Verhältnis 1:1 wurden unter dem Dissolver mit 25 Teilen einer 25%igen Lösung von Celluloseacetobutyrat (Acetylgehalt 15 %, Butyrylgehalt 37 %, Hydroxylgehalt 0,8 %) in einer Mischung aus Butylacetat und Butanol im Verhältnis 2:1, 9,5 Teilen einer 65%igen Lösung eines verzweigten Polyesters mit einer Säurezahl von 20 und einer Hxdroxylzahl von 80 mg KOH/g und einem Molekulargewicht ($M_w$) von 2.000 in Xylol, 4,5 Teilen einer 55%igen butanolischen Lösung eines butanolveretherten Melaminformaldehydharzes und 4 Teilen eines Carbamidsäureharzes auf Basis Butylurethan/Formaldehyd versetzt. Danach wurden 15 Teile der Effektpigmentpaste aus Beispiel 7 homogen eingerührt und mit 20 Teilen Butylacetat verdünnt.

Die in den Beispielen 3 bis 7 enthaltenen Pigmentpasten sind lagerstabil. Sie zeigen keine Sedimentationsneigung und sind auch nach Lagerung noch zu Überzugsmitteln zu verarbeiten. Sie sind auch bei -5°C noch zu lagern, ohne unbrauchbar zu werden.

Die Überzugsmittel der Beispiele 8 bis 11 weisen gute lacktechnische Eigenschaften auf. Sie bilden lagerstabile Überzugsmittel.

**Patentansprüche**

1. Verfahren zur Herstellung einer Pigmentpaste durch Anreibung oder Vermischen von einem oder mehreren Pigmenten und/oder Füllstoffen in einem Pastenharz, dadurch gekennzeichnet, daß man ein Pastenharz auf Basis eines Polyesteroligomer-Polyacrylats verwendet, das erhältlich ist durch radikalische Polymerisation von

   A) 80 - 50 Gew.-% von

   a) einem oder mehreren hydroxyfunktionellen Acrylsäureestern und/oder Methacrylsäureestern und
   b) einer oder mehreren monofunktionellen ethylenisch ungesättigten Säuren, sowie gegebenenfalls
   c) einem oder mehreren, von a) und b) unterschiedlichen, alpha,beta-ethylenisch ungesättigten Monomeren ohne funktionelle Gruppen in

   B) 20 - 50 Gew.-% eines oder mehrerer hydroxyfunktioneller Polyesteroligomerer, mit einem errechneten Molekulargewicht von 200 - 1000, einer Hydroxylzahl von 280 - 600 und einer Säurezahl von 0 - 1,5, erhältlich durch Polykondensation von einem oder mehreren Diolen, Polyolen und Dicarbonsäuren und deren Derivaten,

7

wobei die Monomeren a), b) und c) in derartigen Mengen eingesetzt werden, daß das erhaltene Polyesteroligomer-Polyacrylat eine Hydroxylzahl von 150 - 390 und eine Säurezahl von 16 - 40 aufweist, und daß das Anreiben oder Vermischen in Abwesenheit von Wasser erfolgt.

2. Verfahren nach Anspruch 1, dadurch gekennzeichnet, daß die radikalische Polymerisation in Abwesenheit von Lösemitteln durchgeführt wird.

3. Verfahren nach Anspruch 1, dadurch gekennzeichnet, daß die radikalische Polymerisation in Anwesenheit eines oder mehrerer organischer Lösemittel durchgeführt wird.

4. Verfahren nach einem der Ansprüche 1 bis 3, dadurch gekennzeichnet, daß die Pigmentpaste nach dem Anreiben oder Vermischen, durch Neutralisation und Verdünnen mit Wasser in die wäßrige Phase überführt wird.

5. Verfahren zur Herstellung von Überzugsmitteln, dadurch gekennzeichnet, daß sie mit einer Pigmentpaste hergestellt nach dem Verfahren eines der Ansprüche 1 bis 4 pigmentiert werden.

6. Verwendung eines Polyesteroligomer-Polyacrylats, erhältlich durch radikalische Polymerisation von

    A) 80 - 50 Gew.-% von

        a) einem oder mehreren hydroxyfunktionellen Acrylsäureestern und/oder Methacrylsäureestern und
        b) einer oder mehreren monofunktionellen ethylenisch ungesättigten Säuren gegebenenfalls
        c) einem oder mehreren, von a) und b) unterschiedlichen, alpha,beta-ethylenisch ungesättigten Monomeren ohne funktionelle Gruppen in

    B) 20 - 50 Gew.-% eines oder mehrerer hydroxyfunktioneller Polyesteroligomerer, mit einem errechneten Molekulargewicht von 200 - 1000, einer Hydroxylzahl von 280 - 600 und einer Säurezahl von 0 - 1,5, erhältlich durch Polykondensation von einem oder mehreren Diolen, Polyolen und Dicarbonsäuren und deren Derivaten,

wobei die Monomeren a), b) und c) in derartigen Mengen eingesetzt werden, daß das erhaltene Polyesteroligomer-Polyacrylat eine Hydroxylzahl von 150 - 390 und eine Säurezahl von 16 - 40 aufweist,
als Pastenharz zum Anreiben von deckenden Pigmenten und/oder Füllstoffen oder zum Vermischen mit effektgebenden Pigmenten in Abwesenheit von Wasser.

7. Verwendung der Pigmentpasten hergestellt nach dem Verfahren eines der Ansprüche 1 bis 3 zum Pigmentieren von wäßrigen und nicht-wäßrigen Überzugsmitteln.

8. Verwendung der nach dem Verfahren nach Anspruch 5 erhaltenen Überzugsmittel zur Herstellung von Lackierungen.

## Claims

1. A process for producing a pigment paste by grinding or mixing one or more pigments and/or extenders in a paste resin, characterised in that a paste resin based on a polyester oligomer polyacrylate is used, which is obtainable by the radical polymerisation of

    A) 80 - 50 % by weight of

        a) one or more hydroxy-functional acrylic acid esters and/or methacrylic acid esters and
        b) one or more mono-functional, ethylenically unsaturated acids, and optionally with
        c) one or more alpha,beta-ethylenically unsaturated monomers, which are without functional groups and which are different from a) and b), in

    B) 20 - 50 % by weight of one or more hydroxy-functional polyester oligomers with a calculated molecular weight of 200 - 1000, a hydroxyl number of 280 - 600 and an acid number of 0 - 1.5, obtainable by the condensation polymerisation of one or more diols, polyols and dicarboxylic acids and derivatives thereof,

EP 0 586 986 B1

wherein monomers a), b) and c) are used in amounts such that the polyester oligomer polyacrylate obtained has a hydroxyl number of 150 - 390 and an acid number of 16 - 40, and that grinding or mixing is effected in the absence of water.

2. A process according to claim 1, characterised in that the radical polymerisation is conducted in the absence of solvents.

3. A process according to claim 1, characterised in that the radical polymerisation is conducted in the presence of one or more organic solvents.

4. A process according to any one of claims 1 to 3, characterised in that after grinding or mixing the pigment paste is converted into the aqueous phase by neutralisation and dilution with water.

5. A process for producing coating media, characterised in that they are pigmented with a pigment paste produced by the process of any one of claims 1 to 4.

6. The use of a polyester oligomer polyacrylate, which is obtainable by the radical polymerisation of

   A) 80 - 50 % by weight of

      a) one or more hydroxy-functional acrylic acid esters and/or methacrylic acid esters and
      b) one or more mono-functional, ethylenically unsaturated acids, and optionally with
      c) one or more alpha, beta-ethylenically unsaturated monomers, which are without functional groups and which are different from a) and b), in

   B) 20 - 50 % by weight of one or more hydroxy-functional polyester oligomers with a calculated molecular weight of 200 - 1000, a hydroxyl number of 280 - 600 and an acid number of 0 - 1.5, obtainable by the condensation polymerisation of one or more diols, polyols and dicarboxylic acids and derivatives thereof.

   wherein monomers a), b) and c) are used in amounts such that the polyester oligomer polyacrylate obtained has a hydroxyl number of 150 - 390 and an acid number of 16 - 40,
   as a paste resin for the grinding of covering pigments and/or fillers or for mixing with effect-imparting pigments in the absence of water.

7. The use of the pigment pastes produced by the process of any one of claims 1 to 3 for the pigmentation of aqueous and non-aqueous coating media.

8. The use of the coating media obtained by the process according to claim 5 for the production of lacquer coatings.

**Revendications**

1. Procédé pour la préparation d'une pâte pigmentaire par empâtage ou mélange d'un ou plusieurs pigments et/ou matières de charge dans une résine d'empâtage, caractérisé en ce que l'on utilise une résine d'empâtage à base d'un polyester oligomère-polyacrylate qui est obtenu par polymérisation radicalaire de

   A) 80 à 50 % en poids de

      a) un ou plusieurs esters acryliques et/ou méthacryliques à fonctions hydroxy, et
      b) un ou plusieurs acides monofonctionnels à insaturation éthylénique, et le cas échéant
      c) un ou plusieurs monomères à insaturation alpha, bêta-éthylénique sans groupe fonctionnel, autres que a) et b), dans

   B) 20 à 50 % en poids d'un ou plusieurs polyesters oligomères à fonctions hydroxy, dont le poids moléculaire calculé va de 200 à 1000, l'indice d'hydroxyle de 280 à 600 et l'indice d'acide de 0 à 1,5, eux-mêmes obtenus par polycondensation d'un ou plusieurs diols, polyols et acides dicarboxyliques et leurs dérivés,

      les monomères a), b) et c) étant mis en oeuvre en quantités telles que le polyester oligomère-polyacrylate

9

obtenu ait un indice d'hydroxyle de 150 à 390 et un indice d'acide de 16 à 40, et en ce que le broyage ou mélange est réalisé en l'absence d'eau.

2. Procédé selon revendication 1, caractérisé en ce que la polymérisation radicalaire est réalisée en l'absence de solvant.

3. Procédé selon revendication 1, caractérisé en ce que la polymérisation radicalaire est réalisée en présence d'un ou plusieurs solvants organiques.

4. Procédé selon une des revendications 1 à 3, caractérisé en ce que la pâte pigmentaire, après empâtage ou mélange, est transférée dans la phase aqueuse par neutralisation et dilution par l'eau.

5. Procédé de préparation de produits de revêtement, caractérisé en ce qu'on les pigmente à l'aide d'une pâte pigmentaire préparée par le procédé selon une des revendications la 4.

6. Utilisation d'un polyester oligomère-polyacrylate obtenu par polymérisation radicalaire de

   A) 80 à 50 % en poids de

   a) un ou plusieurs esters acryliques et/ou méthacryliques à fonctions hydroxy, et
   b) un ou plusieurs acides monofonctionnels à insaturation éthylénique, et le cas échéant
   c) un ou plusieurs monomères à insaturation alpha, bêta-éthylénique, sans groupe fonctionnel, autres que a) et b), dans

   B) 20 à 50 % en poids d'un ou plusieurs polyesters oligomères à fonctions hydroxy, à un poids moléculaire calculé va de 200 à 1000, un indice d'hydroxyle de 280 à 600 et un indice d'acide de 0 à 1,5, eux-mêmes obtenus par polycondensation d'un ou plusieurs diols, polyols et acides dicarboxyliques et leurs dérivés,

   les monomères a), b) et c) étant mis en oeuvre en quantités telles que le polyester oligomère-polyacrylate obtenu ait un indice d'hydroxyle de 150 à 390 et un indice d'acide de 16 à 40,
   en tant que résine d'empâtage de pigments couvrants et/ou de matières de charge ou pour le mélange avec des pigments à effets en l'absence d'eau.

7. Utilisation des pâtes pigmentaires préparées par le procédé selon une des revendications 1 à 3, pour la pigmentation de produits de revêtement aqueux et non aqueux.

8. Utilisation des produits de revêtement obtenus par le procédé selon revendication 5 pour l'application de revêtements de peintures.